# EUROPEAN PATENT APPLICATION

(11) **EP 4 482 079 A1**
(43) Date of publication of application: **25.12.2024**
(21) Application number: 23755646.9
(22) Date of filing: 09.01.2023
(51) Int. Cl.: H04L 9/32, H04W 12/06

(54) **IDENTITY AUTHENTICATION USING TIME-BASED ONE-TIME PASSWORD ALGORITHM**

(30) Priority: 18.02.2022 CN 202210150943
(71) Applicant: Alipay (Hangzhou) Information Technology Co., Ltd., Hangzhou, Zhejiang 310000 (CN)
(72) Inventor: WANG, Zhenya, Hangzhou, Zhejiang 310000 (CN)
(74) Representative: Fish & Richardson P.C.
(86) International application number: PCT/CN2023/071290
(87) International publication number: WO 2023/155642

(57) **Abstract**

Embodiments of this specification provide TOTP-based identity authentication methods and apparatuses. The method includes: obtaining a two-dimensional code from a web end; reading, from the two-dimensional code, a key needed for enabling TOTP and a first signature, where the first signature is obtained after an authentication server signs the key by using a first private key in a first public-private key pair; performing signature verification on the first signature by using a first public key in the first public-private key pair obtained in advance; and performing token calculation based on the key after the verification on the first signature succeeds; and providing a calculated token to a user.

## Description

### A. TECHNICAL FIELD

One or more embodiments of this specification relate to network information technologies, and in particular, to identity authentication based on a time-based one-time password algorithm (TOTP).

### B. BACKGROUND

With the rapid development of the network, various business applications are generated based on the network. A user only needs to download an application client, that is, an application program (APP), of a corresponding business application from a terminal device, and registers with and login to the corresponding business application by using the application client, to enjoy the corresponding business application, for example, watching a movie or purchasing a product.

In a business application use process, for example, logging in to a business application or performing transfer by using a business application, the user usually needs to input verification information to verify legitimacy of the user's identity. Currently, the verification information input by the user is mainly a user name and a password, or a verification code received by using an SMS message, etc. However, in this method, the user still needs to manually input a string of information, and the user further needs to remember the password in the method of inputting the password. Consequently, it is inconvenient for use by the user. Therefore, an identity authentication method with simpler user operations is needed.

### C. SUMMARY

One or more embodiments of this specification describe identity authentication methods and apparatuses, to simplify user operations.

According to a first aspect, a TOTP-based identity authentication method is provided, including: obtaining a two-dimensional code from a web end; reading, from the two-dimensional code, a key needed for enabling TOTP and a first signature, where the first signature is obtained after an authentication server signs the key by using a first private key in a first public-private key pair; performing signature verification on the first signature by using a first public key in the first public-private key pair obtained in advance; and performing token calculation based on the key after the verification on the first signature succeeds; and providing a calculated token to a user.

After the verification on the first signature succeeds and before token calculation is performed based on the key, the method further includes: signing device information of a terminal device by using a second private key in a second public-private key pair to obtain a second signature; adding the second signature to an enabling confirmation request and sending the enabling confirmation request to the authentication server; and continuing to perform the step of performing token calculation based on the key if a verification success message sent by the authentication server is received..

A first TA application in a TEE of the terminal device performs the step of performing signature verification on the first signature by using a first public key in the first public-private key pair obtained in advance; and/or a second TA application in the TEE of the terminal device performs the step of performing token calculation based on the key.

According to a second aspect, a TOTP-based identity authentication method is provided, including: sending, to an application server, a key request used to request a key needed for enabling TOTP; receiving the key and a first signature sent by the application server, where the first signature is obtained after an authentication server signs the key by using a first private key in a first public-private key pair; generating a two-dimensional code by using the received key and the received first signature, and sending the two-dimensional code to a business application end; receiving a token input by a user, and adding the token to an identity verification request and sending the identity verification request to the application server; and receiving an identity verification result sent by the application server.

According to a third aspect, a TOTP-based identity authentication method is provided, including: receiving a key request that is sent by a web end and that is used to request a key needed for enabling TOTP; generating the key; sending the key to an authentication server; receiving a first signature sent by the authentication server, where the first signature is obtained after the authentication server signs the key by using a first private key in a first public-private key pair; sending the key and the first signature to the web end; receiving an identity verification request that is sent by the web end and that includes a token; and verifying legitimacy of a user's identity based on the identity verification request, and sending an identity verification result to the wed end.

After the sending the key and the first signature to the web end and before the receiving an identity verification request that is sent by the web end and that includes a token, the method further includes: storing the generated key after receiving an enabling confirmation success notification sent by the authentication server; and the verifying legitimacy of a user's identity based on the identity verification request includes: performing token calculation based on the stored key, and determining whether a calculated token is consistent with the token included in the identity verification request, where if the calculated token is consistent with the token included in the identity verification request, the identity verification is "legal"; otherwise, the identity verification is "illegal".

According to a fourth aspect, a TOTP-based identity authentication method is provided, including: receiving a key sent by an application server; signing the key by using a first private key in a first public-private key pair to obtain a first signature; and sending the first signature to the application server.

After the sending the first signature to the application server, the method further includes: receiving an enabling confirmation request that is sent by a business application end and that includes a second signature, where the second signature is obtained after the business application end signs, by using a second private key in a second public-private key pair, device information of a terminal device that the business application end is located; performing signature verification on the second signature by using a second public key in the second public-private key pair obtained in advance; and sending a verification success message to the business application end after the verification on the second signature succeeds.

Before the performing signature verification on the second signature by using a second public key in the second public-private key pair obtained in advance, the method further includes: obtaining, based on the received enabling confirmation request, a device model of the terminal device that the business application end is located; and determining, based on the obtained device model, whether a security level of the terminal device satisfies an enabling need; and if yes, querying the second public key in the second public-private key pair based on the obtained device model, and performing the step of performing signature verification on the second signature by using the second public key.

According to a fifth aspect, a TOTP-based identity authentication apparatus is provided, including: a scanning module, configured to obtain a two-dimensional code from a web end; a reading module, configured to read, from the two-dimensional code, a key needed for enabling TOTP and a first signature, where the first signature is obtained after an authentication server signs the key by using a first private key in a first public-private key pair; a first signature verification module, configured to perform signature verification on the first signature by using a first public key in the first public-private key pair obtained in advance; and a token calculation module, configured to perform token calculation based on the key after the verification on the first signature succeeds, and provide a calculated token to a user.

According to a sixth aspect, a TOTP-based identity authentication apparatus is provided, including: a TOTP enabling processing module, configured to send, to an application server, a key request used to request a key needed for enabling TOTP; a two-dimensional code generation module, configured to receive the key and a first signature sent by the application server, where the first signature is obtained after an authentication server signs the key by using a first private key in a first public-private key pair; and generate a two-dimensional code by using the received key and the received first signature, and send the two-dimensional code to a business application end; and a TOTP verification processing module, configured to receive a token input by a user, and add the token to an identity verification request and send the identity verification request to the application server; and receive an identity verification result sent by the application server.

According to a seventh aspect, a TOTP-based identity authentication apparatus is provided, including: a key generation module, configured to receive a key request that is sent by a web end and that is used to request a key needed for enabling TOTP, and generate the key; a signature addition request module, configured to send the key to an authentication server; a key delivery module, configured to receive a first signature sent by the authentication server, where the first signature is obtained after the authentication server signs the key by using a first private key in a first public-private key pair; and send the key and the first signature to the wed end; and a verification execution module, configured to receive an identity verification request that is sent by the web end and that includes a token; and verify legitimacy of a user's identity based on the identity verification request, and send an identity verification result to the wed end.

According to an eighth aspect, a TOTP-based identity authentication apparatus is provided, including: a receiving module, configured to receive a key sent by an application server; a first signature generation module, configured to sign the key by using a first private key in a first public-private key pair to obtain a first signature; and a sending module, configured to send the first signature to the application server.

According to a ninth aspect, a computing device is provided, including a memory and a processor. The memory stores executable code, and when executing the executable code, the processor implements the method according to any one of the embodiments of this specification.

According to the TOTP-based identity authentication methods and apparatuses provided in the embodiments of this specification, the application server does not directly send the generated key to the web end, but first triggers the authentication server to add a signature to the key, and then sends the key to the web end together with the first signature obtained after the signature addition, so that the two-dimensional code provided by the web end to the business application end in a subsequent process can also include information about the first signature generated by the authentication server. As such, the business application end can first perform signature authentication on the first signature by using the first public key; and if the verification succeeds, it can be determined that the read key is secure for user; or if the verification fails, it is determined that the read key is unavailable, for example, the key is a key forged by an attacker. Therefore, it is ensured that the business application end uses a secure key, thereby ensuring security of the business application end in the TOTP-based identity authentication process.

### D. BRIEF DESCRIPTION OF DRAWINGS

To describe the technical solutions in the embodiments of this specification or in an existing technology more clearly, the following briefly describes the accompanying drawings needed for describing the embodiments or the existing technology. Clearly, the accompanying drawings in the following descriptions show some embodiments of this specification, and a person of ordinary skill in the art can still derive other drawings from these accompanying drawings without creative efforts.
FIG. 1 is a schematic diagram illustrating a system architecture applied to one or more embodiments of this specification;
FIG. 2 is a flowchart illustrating a TOTP-based identity authentication method implemented at a business application end according to one or more embodiments of this specification;
FIG. 3 is a flowchart illustrating a TOTP-based identity authentication method implemented at a wed end according to one or more embodiments of this specification;
FIG. 4 is a flowchart illustrating a TOTP-based identity authentication method implemented in an application server according to one or more embodiments of this specification;
FIG. 5 is a flowchart illustrating a TOTP-based identity authentication method implemented in an authentication server according to one or more embodiments of this specification;
FIG. 6 is a flowchart illustrating a TOTP-based identity authentication method implemented through cooperation between ends according to one or more embodiments of this specification;
FIG. 7 is a schematic diagram illustrating a TOTP-based identity authentication apparatus disposed at a business application end according to one or more embodiments of this specification;
FIG. 8 is a schematic diagram illustrating a TOTP-based identity authentication apparatus disposed at a web end according to one or more embodiments of this specification;
FIG. 9 is a schematic diagram illustrating a TOTP-based identity authentication apparatus disposed in an application server according to one or more embodiments of this specification; and
FIG. 10 is a schematic diagram illustrating a TOTP-based identity authentication apparatus disposed in an authentication server according to one or more embodiments of this specification.

### E. DESCRIPTION OF EMBODIMENTS

As described above, in the existing technology, when authentication is performed on a user's identity, a user needs to input a string of information such as a password or a verification code in SMS message to a business application, and the user needs to remember the password in the method of inputting the password. Consequently, it is inconvenient for use by the user.

To simplify user operations, the embodiments of this specification propose an identity authentication method based on a time-based one-time password algorithm (TOTP). In the method, a user only needs to scan a two-dimensional code without manually inputting a string of information to implement identity authentication, thereby greatly simplifying user operations. However, security can be reduced when the two-dimensional code is used. Therefore, the embodiments of this specification further propose a processing process of implementing secure identity authentication based on TOTP.

The following describes the solutions provided in this specification with reference to the accompanying drawings.

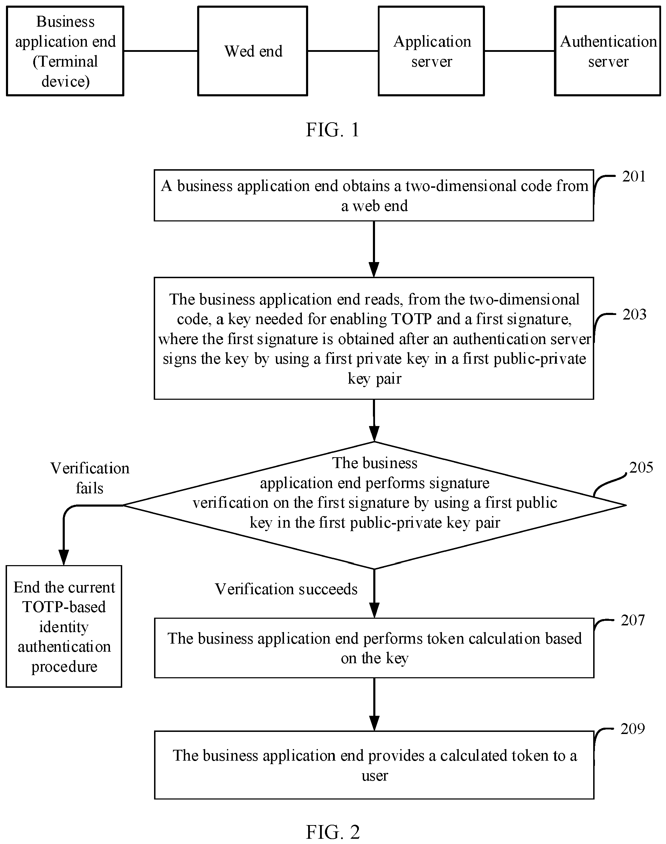

To facilitate understanding of this specification, a system architecture used in this specification is first described. As shown in FIG. 1, the system architecture mainly includes a business application end that supports TOTP, a web end, an application server that supports TOTP, and an authentication server that are installed in a terminal device.

The web end can be disposed in a server. Alternatively, the web end can be divided into a front end and a back end, where the front end is disposed in the terminal device, and the back end is disposed in a server. The application server that supports TOTP is disposed in a server that provides a corresponding business service for a business application. The authentication server can be disposed in an Internet Finance Authentication Alliance (IFAA) server. IFAA is used to formulate a unified protocol for biometric authentication, mitigate an industry chain coordination problem, and provide the public with a more convenient and secure biometric identification service. It can be understood that the application server that supports TOTP and the authentication server can be simultaneously disposed in one server, or can be respectively disposed in different servers.

The end devices in the embodiments of this specification can interact with each other by using a network. The network can include various connection types, such as a wired or wireless communication link or an optical fiber cable.

The identity authentication implementation method provided in the embodiments of this specification relates to the four network nodes shown in FIG. 1. Therefore, the following describes, by using different embodiments, processing performed in an identity authentication process by each of the business application end, the web end, the application server supporting TOTP, and the authentication server that are installed in the terminal device.

First, processing performed by the business application end installed in the terminal device in the identity authentication process is described.

FIG. 2 is a flowchart illustrating a TOTP-based identity authentication method implemented at a business application end according to one or more embodiments of this specification. The method is performed by a business application end installed in a terminal device. It can be understood that the method can alternatively be performed by any apparatus, device, platform, device cluster, etc. having computing and processing capabilities. Referring to FIG. 2, the method includes the following steps.

Step 201: The business application end obtains a two-dimensional code from a web end.

Step 203: The business application end reads, from the two-dimensional code, a key needed for enabling TOTP and a first signature, where the first signature is obtained after an authentication server signs the key by using a first private key in a first public-private key pair.

Step 205: The business application end performs signature verification on the first signature by using a first public key in the first public-private key pair obtained in advance, and performs step 207 after the verification on the first signature succeeds.

Step 207: The business application end performs token calculation based on the key.

Step 209: The business application end provides a calculated token to a user.

It can be seen from the foregoing description that in the TOTP-based identity authentication process, the business application end can read the key and the first signature from the two-dimensional code. The business application end does not directly use the key read from the two-dimensional code to perform token calculation, but first performs signature verification on the first signature by using the first public key obtained in advance; and if the verification succeeds, it can be determined that the read key is secure for user; or if the verification fails, it is determined that the read key is unavailable, for example, the key is a key forged by an attacker. Therefore, it is ensured that the business application end uses a secure key, thereby ensuring security of the business application end in the TOTP-based identity authentication process.

The following describes the steps in FIG. 2 with reference to specific embodiments and processing performed through cooperation between the other network nodes in FIG. 1.

First, for step 201, the business application end obtains the two-dimensional code from the web end.

The business application end can be any type of business application loaded in the terminal device, such as an ALIPAY App, a GAME App, or an ONLINE BANK App.

Referring to FIG. 1, in the TOTP-based identity authentication process, first, the web end is triggered, and the web end sends, to the application server, a key request used to request a key needed for enabling TOTP; the application server generates the key after receiving the key request, and sends the key to the authentication server; the authentication server signs the key by using a first private key in a first public-private key pair to obtain a first signature, and sends the first signature to the application server; the application server sends the key and the first signature to the web end; and the web end generates a two-dimensional code by using the received key and the received first signature, and sends the two-dimensional code to the business application end. So far, the business application end can perform processing in step 201, that is, the business application end obtains the two-dimensional code from the web end.

Next, for step 203, the business application end reads, from the two-dimensional code, the key needed for enabling TOTP and the first signature.

As described above, the first signature is obtained after the authentication server signs the key generated by the application server by using the first private key in the first public-private key pair.

In one or more embodiments of this specification, the first public-private key pair is used to perform security verification in a direction from a server to a terminal device. The first public key in the first public-private key pair can be written to the terminal device that the business application end is located at delivery of the terminal device, and cannot be modified. In addition, to further improve security, the first public key can be stored in a trusted execution environment (TEE) of the terminal device. The first private key in the first public-private key pair is stored inside the authentication server, and cannot be obtained. It can be seen that, even after a communication protocol is hijacked, because the first private key cannot be obtained, a server cannot be counterfeited, thereby improving security.

Next, for step 205, the business application end performs signature verification on the first signature by using the first public key in the first public-private key pair obtained in advance, and performs step 207 after the verification on the first signature succeeds.

A trusted application (TA) in the TEE of the terminal device that the business application end is located can perform signature verification on the first signature in the TEE by using the first public key stored in the TEE. In this method, the first public key is stored in the TEE, and the TA application in the TEE performs signature verification in the TEE, thereby greatly improving security of the identity authentication process.

In step 205, after the verification on the first signature succeeds, the business application end can determine that the key read from the two-dimensional code is secure, and then stores the key in this case; or if the verification on the first signature fails, ends the current TOTP-based identity authentication procedure.

After the verification on the first signature succeeds, it can be determined that no attack on the server occurs in the direction from the server to the terminal device, and the key received by the business application end is secure and can be used for subsequent calculation. However, to further improve security, in one or more embodiments of this specification, another signature verification can be performed in a direction from the terminal device to the server, to determine security of the terminal device. As such, after step 205 and before step 207 is performed, the following steps are further included.

Step 2061: The business application end signs, by using a second public key in a second public-private key pair, device information of a terminal device that the business application end is located to obtain a second signature.

Step 2063: The business application end adds the second signature to an enabling confirmation request and sends the enabling confirmation request to the authentication server.

Step 2065: The business application end determines whether a verification success message sent by the authentication server is received, and continues to perform step 207 if the verification success message is received; otherwise, ends the current TOTP-based identity authentication procedure.

In the foregoing step 2061 to step 2065, the second public-private key pair is used to perform security verification in the direction from the terminal device to the server. The second public key in the second public-private key pair can be written to a device that the authentication server is located at delivery of the device, and cannot be modified. The second private key in the second public-private key pair can be stored in the TEE of the terminal device. It can be seen that, even after the terminal device is hijacked, because the second private key cannot be obtained, the terminal device cannot counterfeited, thereby further improving security.

Step 2061 can be performed by the TA in the TEE of the terminal device that the business application end is located, that is, the TA signs, in the TEE by using the second private key stored in the TEE, the device information of the terminal device that the business application end is located, to obtain the second signature. In this method, the second private key is stored in the TEE, and the TA application in the TEE generates the second signature in the TEE, thereby greatly improving security of the identity authentication process.

In the foregoing step 2061, the device information used can be a device model.

After the foregoing step 2063 is completed, the authentication server receives the enabling confirmation request that is sent by the business application end and that includes the second signature, and the authentication server performs signature verification on the second signature by using the foregoing second public key. After the verification on the second signature succeeds, the authentication server sends a verification success message to the business application end, and ends the current TOTP-based identity authentication procedure when the verification on the second signature fails.

Next, in step 207, the business application end performs token calculation based on the stored key.

To further improve security, the TA application in the TEE of the terminal device that the business application end is located can perform key-based token calculation in step 207.

Next, in step 209, the business application end provides a calculated token to a user.

After step 209, the user obtains the token. The user inputs the token to the web end, and the web end adds the token input by the user to an identity verification request and sends the identity verification request to the application server. The application server performs token calculation based on the stored key, and determines whether a calculated token is consistent with the token included in the received identity verification request; and if the calculated token is consistent with the token included in the received identity verification request, the identity verification is "legal", and the application server sends an identity verification success result to the web end; or if the calculated token is inconsistent with the token included in the received identity verification request, the identity verification is "illegal", and the application server sends an identity verification failure result to the web end. As such, the web end obtains an identity verification result, and performs subsequent corresponding processing, for example, continues to perform a business application or prevents a subsequent business application.

So far, the TOTP-based identity authentication process performed at the business application end is completed.

Next, processing performed by the web end in the identity authentication process is described.

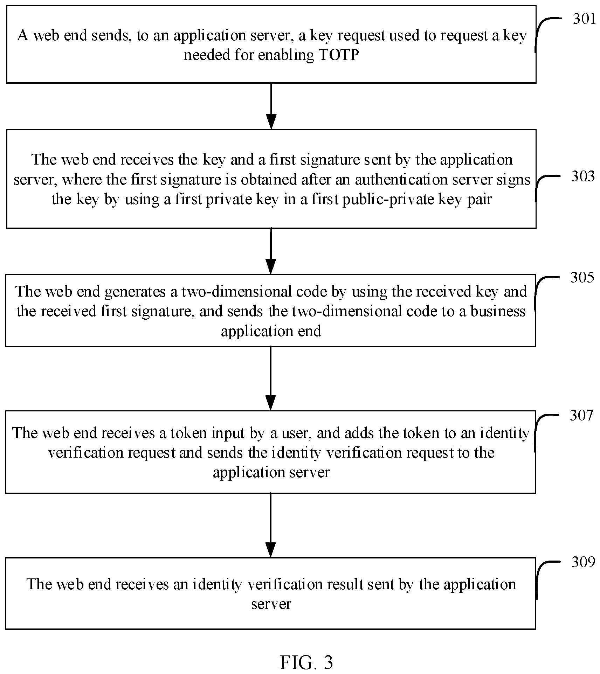

FIG. 3 is a flowchart illustrating a TOTP-based identity authentication method implemented at a wed end according to one or more embodiments of this specification. The method is performed by the web end. It can be understood that the method can alternatively be performed by any apparatus, device, platform, device cluster, etc. having computing and processing capabilities. Referring to FIG. 3, the method includes the following steps.

Step 301: The web end sends, to an application server, a key request used to request a key needed for enabling TOTP.

Step 303: The web end receives the key and a first signature sent by the application server, where the first signature is obtained after an authentication server signs the key by using a first private key in a first public-private key pair.

Step 305: The web end generates a two-dimensional code by using the received key and the received first signature, and sends the two-dimensional code to a business application end.

Step 307: The web end receives a token input by a user, and adds the token to an identity verification request and sends the identity verification request to the application server.

Step 309: The web end receives an identity verification result sent by the application server.

It can be seen from the foregoing descriptions that in the TOTP-based identity authentication process, the web end generates the two-dimensional code by using the received key and the received first signature, that is, the two-dimensional code includes not only information about the key, but also information about the first signature generated by the authentication server. Therefore, in a subsequent process, the business application end can first perform signature verification on the first signature by using a first public key; and if the verification succeeds, it can be determined that the read key is secure for use; or if the verification fails, it is determined that the read key is unavailable, for example, the key is a key forged by an attacker. Therefore, it is ensured that the business application end uses a secure key, thereby ensuring security of the business application end in the TOTP-based identity authentication process.

For descriptions of the steps in FIG. 3, references can be made to the foregoing corresponding descriptions of the steps in FIG. 2.

Next, processing performed by the application server in the identity authentication process is described.

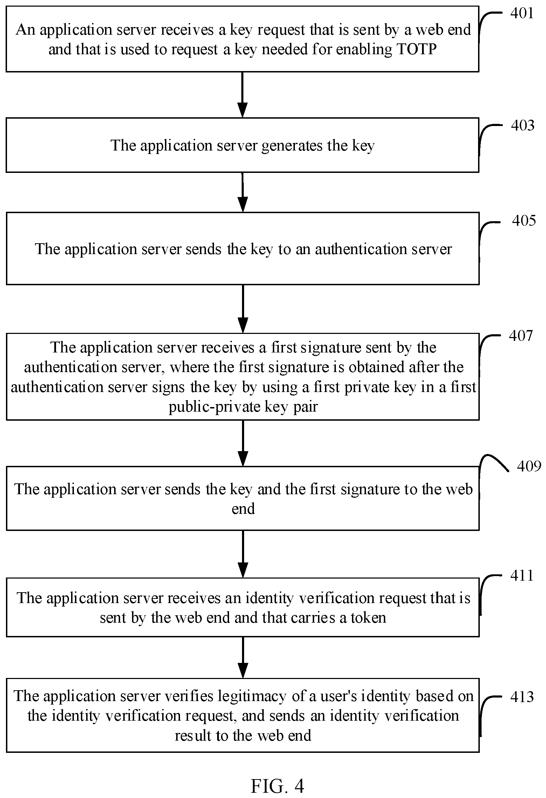

FIG. 4 is a flowchart illustrating a TOTP-based identity authentication method implemented in an application server according to one or more embodiments of this specification. The method is performed by the application server. It can be understood that the method can alternatively be performed by any apparatus, device, platform, device cluster, etc. having computing and processing capabilities. Referring to FIG. 4, the method includes the following steps.

Step 401: The application server receives a key request that is sent by a web end and that is used to request a key needed for enabling TOTP.

Step 403: The application server generates the key.

Step 405: The application server sends the key to an authentication server.

Step 407: The application server receives a first signature sent by the authentication server, where the first signature is obtained after the authentication server signs the key by using a first private key in a first public-private key pair.

Step 409: The application server sends the key and the first signature to a web end.

Step 411: The application server receives an identity verification request that is sent by the web end and that includes a token.

Step 413: The application server verifies legitimacy of a user's identity based on the identity verification request, and sends an identity verification result to the web end.

It can be seen from the foregoing descriptions that in the TOTP-based identity authentication process, the application server does not directly send the generated key to the web end, but first triggers the authentication server to add a signature to the key, and then sends the key to the web end together with the first signature obtained after the signature addition, so that a two-dimensional code provided by the web end to a business application end in a subsequent process can also include information about the first signature generated by the authentication server. As such, the business application end can first perform signature authentication on the first signature by using a first public key; and if the verification succeeds, it can be determined that the read key is secure for user; or if the verification fails, it is determined that the read key is unavailable, for example, the key is a key forged by an attacker. Therefore, it is ensured that the business application end uses a secure key, thereby ensuring security of the business application end in the TOTP-based identity authentication process.

For descriptions of the steps in FIG. 4, references can be made to the foregoing corresponding descriptions of the steps in FIG. 2.

As described above, the application server is logically separated from the authentication server. In practice, the application server and the authentication server can be respectively disposed in different devices, or can be disposed in the same device.

If the business application end performs related processing in step 2061, step 2063, and step 2065, the authentication server performs verification on the second signature, and sends an enabling confirmation success notification to the application server after the verification succeeds. As such, in the foregoing process shown in FIG. 4, after step 409 and before step 411, the method further includes following: After receiving the enabling confirmation success notification sent by the authentication server, the application server can determine that the key generated by the application server is available before storing the generated key. As such, the process in step 411 can include: The application server performs token calculation based on the stored key; and the application server determines whether a calculated token is consistent with the token included in the authentication request, where if the calculated token is consistent with the token included in the authentication request, the identity verification is "legal"; otherwise, the identity verification is "illegal".

Next, processing performed by the authentication server in the identity authentication process is described.

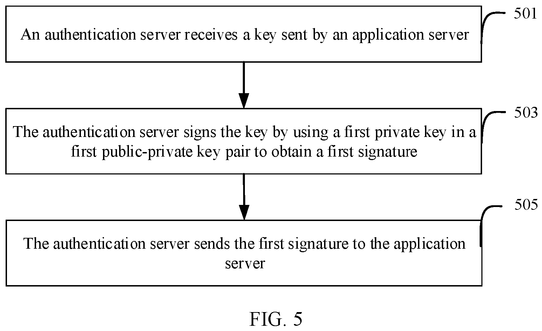

FIG. 5 is a flowchart illustrating a TOTP-based identity authentication method implemented in an authentication server according to one or more embodiments of this specification. The method is performed by the authentication server. It can be understood that the method can alternatively be performed by any apparatus, device, platform, device cluster, etc. having computing and processing capabilities. Referring to FIG. 5, the method includes the following steps.

Step 501: The authentication server receives a key sent by an application server.

Step 503: The authentication server signs the key by using a first private key in a first public-private key pair to obtain a first signature.

Step 505: The authentication server sends the first signature to the application server.

It can be seen from the foregoing descriptions that in the TOTP-based identity authentication process, the authentication server generates the first signature by using the key of the application server, so that a two-dimensional code provided by a web end to a business application end in a subsequent process can also include information about the first signature generated by the authentication server. As such, the business application end can first perform signature authentication on the first signature by using a first public key; and if the verification succeeds, it can be determined that the read key is secure for user; or if the verification fails, it is determined that the read key is unavailable, for example, the key is a key forged by an attacker. Therefore, it is ensured that the business application end uses a secure key, thereby ensuring security of the business application end in the TOTP-based identity authentication process.

For descriptions of the steps in FIG. 5, references can be made to the foregoing corresponding descriptions of the steps in FIG. 2.

In one or more embodiments of this specification, another signature verification can be performed in a direction from a terminal device to a server. In this case, after step 505, the method can further include step 507: The authentication server receives an enabling confirmation request that is sent by a business application end and that includes a second signature, where the second signature is obtained after the business application end signs, by using a second private key in a second public-private key pair, the device information of a terminal device that the business application end is located.

Step 509: The authentication server performs signature verification on the second signature by using a second public key in the second public-private key pair obtained in advance.

Step 511: After the verification on the second signature succeeds, the authentication server sends a verification success message to the business application end.

In one or more embodiments of this specification, after step 507 and before step 509, the method can further include: Step 5081: The authentication server obtains, based on the received enabling confirmation request, a device model of the terminal device that the business application end is located. Step 5083: The authentication server determines, based on the obtained device model, whether a security level of the terminal device satisfies an enabling need; and if yes, performs step 5085; otherwise, ends the current procedure of the TOTP-based identity authentication method.

The authentication server can store a blacklist, including devices with a low security level. As such, in step 5083, the authentication server can identify the device model in the blacklist through searching. If the device type can be identified, it is considered that the security level of the terminal device does not satisfy the enabling need; or if the device model cannot be identified, it is considered that the security level of the terminal device satisfies the enabling need.

Step 5085: The authentication server queries the second public key in the second public-private key pair based on the obtained device model, and performs step 509.

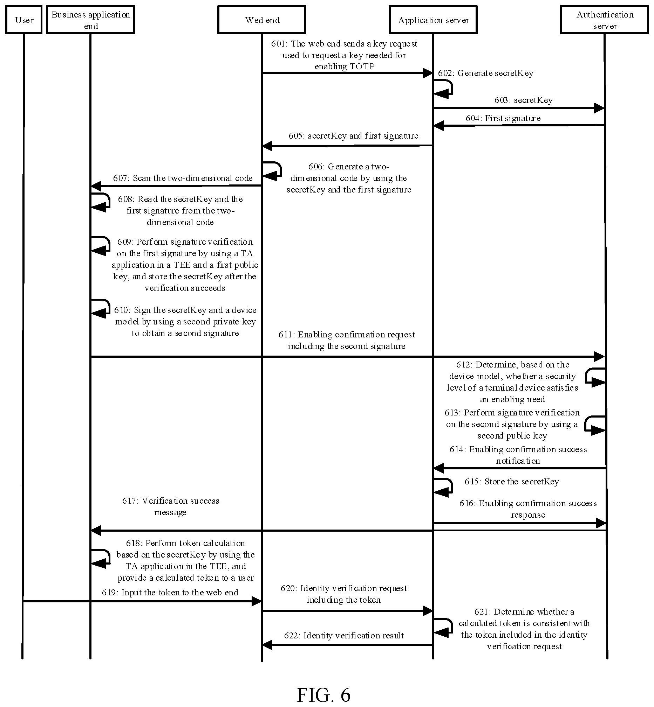

The following describes a TOTP-based identity authentication method with reference to processing performed through cooperation between the four network nodes shown in FIG. 1. Referring to FIG. 1 and FIG. 6, the method includes the following steps.

Step 601: The web end sends, to the application server, a key request used to request a key needed for enabling TOTP.

Step 602: The application server generates the key, denoted as secretKey.

Step 603: The application server sends the secretKey to the authentication server.

Step 604: The authentication server signs the secretKey by using a first private key in a first public-private key pair to obtain a first signature, and sends the first signature to the application server.

Step 605: The application server sends, to the web end, the generated secretKey and the first signature sent by the authentication server.

Step 606: The web end generates a two-dimensional code by using the received secretKey and the received first signature, and sends the two-dimensional code to the business application end.

Step 607: The business application end scans the two-dimensional code.

Step 608: The business application end reads the secretKey and the first signature from the two-dimensional code.

Step 609: The business application end performs signature verification on the first signature by using a TA application in a TEE and a first public key in the first public-private key pair, stores the secretKey after the verification on the first signature succeeds, and then performs step 610.

Step 610: The business application end signs, by using a second public key in a second public-private key pair, the secretKey and a device model of a terminal device that the business application end is located to obtain a second signature.

Step 611: The business application end adds the second signature to an enabling confirmation request and sends the enabling confirmation request to the authentication server.

Step 612: The authentication server obtains, based on the received enabling confirmation request, a device model of the terminal device that the business application end is located; determines, based on the obtained device model, whether a security level of the terminal device satisfies an enabling need; and if yes, performs step 613; otherwise, ends the current procedure of the TOTP-based identity authentication method.

Step 613: The authentication server queries a second public key in the second public-private key pair based on the obtained device model; performs, by using the second public key, signature verification on the second signature included in the enabling confirmation request; if the verification on the second signature succeeds, performs step 614; otherwise, ends the current procedure of the TOTP-based identity authentication method.

Step 614: The authentication server sends an enabling confirmation success notification to the application server.

Step 615: The application server stores the previously generated secretKey.

Step 616: The application server sends the enabling confirmation success response to the authentication server.

Step 617: The authentication server sends a verification success message to the business application end.

Step 618: The business application end performs token calculation based on the secretKey by using the TA application in the TEE, and provides a calculated token to a user.

Step 619: The user inputs the token to the web end for identity verification.

Step 620: The web end adds the token input by the user to an identity verification request, and sends the identity verification request to the application server.

Step 621: The application server performs token calculation based on the secretKey stored by the application server, and determines whether a calculated token is consistent with the token included in the identity verification request, where if the calculated token is consistent with the token included in the identity verification request, the identity verification is "legal"; otherwise, the identity verification is "illegal".

Step 622: The application server sends an identity verification result to the web end.

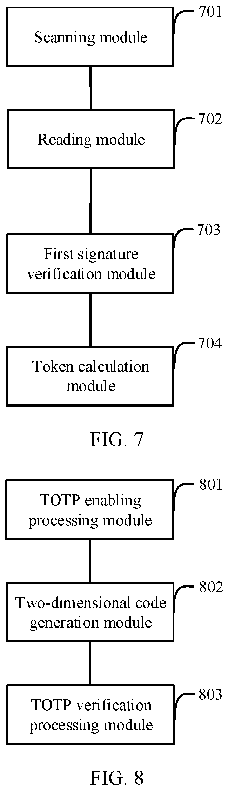

One or more embodiments of this specification provide a TOTP-based identity authentication apparatus. The apparatus is disposed at a business application end and can be located in a terminal device. Referring to FIG. 7, the apparatus includes: a scanning module 701, configured to obtain a two-dimensional code from a web end; a reading module 702, configured to read, from the two-dimensional code, a key needed for enabling TOTP and a first signature, where the first signature is obtained after an authentication server signs the key by using a first private key in a first public-private key pair; a first signature verification module 703, configured to perform signature verification on the first signature by using a first public key in the first public-private key pair obtained in advance; and a token calculation module 704, configured to perform token calculation based on the key after the verification on the first signature succeeds, and provide a calculated token to a user.

The apparatus disposed at the business application end shown in FIG. 7 further includes a second signature generation module (not shown in FIG. 7), configured to sign, by using a second public key in a second public-private key pair, device information of a terminal device that the business application end is located to obtain a second signature, and add the second signature to an enabling confirmation request and sends the enabling confirmation request to the authentication server. The token calculation module 704 is configured to perform token calculation based on the key if a verification success message sent by the authentication server is received.

In the apparatus disposed at the business application end shown in FIG. 7, the first signature verification module 703 includes a first TA application in a TEE of the terminal device that the business application end is located, and the TA application performs signature verification on the first signature by using the first public key in the first public-private key pair obtained in advance.

In the apparatus disposed at the business application end shown in FIG. 7, the token calculation module 704 includes a second TA application in the TEE of the terminal device that the business application end is located, and the second TA application performs token calculation based on the key.

One or more embodiments of this specification provide a TOTP-based identity authentication apparatus. The apparatus is disposed at a web end. Referring to FIG. 8, the apparatus includes: a TOTP enabling processing module 801, configured to send, to an application server, a key request used to request a key needed for enabling TOTP; a two-dimensional code generation module 802, configured to receive the key and a first signature sent by the application server, where the first signature is obtained after an authentication server signs the key by using a first private key in a first public-private key pair; and generate a two-dimensional code by using the received key and the received first signature, and send the two-dimensional code to a business application end; and a TOTP verification processing module 803, configured to receive a token input by a user, and add the token to an identity verification request and send the identity verification request to the application server; and receive an identity verification result sent by the application server.

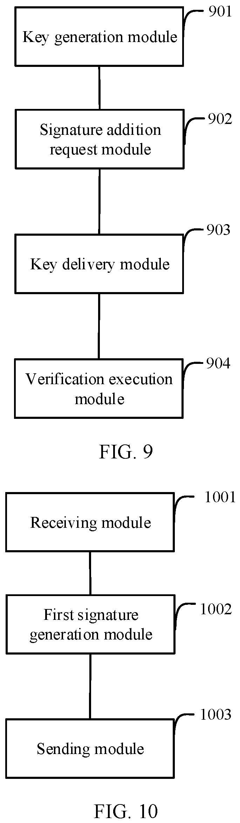

One or more embodiments of this specification provide a TOTP-based identity authentication apparatus. The apparatus is disposed in an application server. Referring to FIG. 9, the apparatus includes: a key generation module 901, configured to receive a key request that is sent by a web end and that is used to request a key needed for enabling TOTP, and generate the key; a signature addition request module 902, configured to send the key to an authentication server; a key delivery module 903, configured to receive a first signature sent by the authentication server, where the first signature is obtained after the authentication server signs the key by using a first private key in a first public-private key pair; and send the key and the first signature to the wed end; and a verification execution module 904, configured to receive an identity verification request that is sent by the web end and that includes a token; and verify legitimacy of a user's identity based on the identity verification request, and send an identity verification result to the wed end.

In one or more embodiments of the apparatus in this specification, the key generation module 901 is configured to store the generated key after receiving an enabling confirmation success notification sent by the authentication server; and the verification execution module 904 is configured to perform token calculation based on the stored key, and determines whether a calculated token is consistent with the token included in the identity verification request, where if the calculated token is consistent with the token included in the identity verification request, the identity verification is "legal"; otherwise, the identity verification is "illegal".

One or more embodiments of this specification provide a TOTP-based identity authentication apparatus. The apparatus is disposed in an authentication server. Referring to FIG. 10, the apparatus includes: a receiving module 1001, configured to receive a key sent by an application server; a first signature generation module 1002, configured to sign the key by using a first private key in a first public-private key pair to obtain a first signature; and a sending module 1003, configured to send the first signature to the application server.

In one or more embodiments of this specification, the apparatus disposed in the authentication server further includes a second signature verification module (not shown in FIG. 10), configured to receive an enabling confirmation request that is sent by a business application end and that includes a second signature, where the second signature is obtained after the business application end signs, by using a second private key in a second public-private key pair, device information of a terminal device that the business application end is located; perform signature verification on the second signature by using a second public key in the second public-private key pair obtained in advance; and send a verification success message to the business application end after the verification on the second signature succeeds.

In one or more embodiments of this specification, the apparatus disposed in the authentication server further includes a security verification module (not shown in FIG. 10), configured to obtain, based on the received enabling confirmation request, a device model of the terminal device that the business application end is located; and determine, based on the obtained device model, whether a security level of the terminal device satisfies an enabling need; and if yes, queries the second public key in the second public-private key pair based on the obtained device model.

One or more embodiments of this specification provide a computer-readable storage medium. The computer-readable storage medium stores a computer program. When the computer program is executed in a computer, the computer is enabled to perform the method according to any one of the embodiments of this specification.

One or more embodiments of this specification provide a computing device, including a memory and a processor. The memory stores executable code, and when executing the executable code, the processor implements the method according to any one of the embodiments of this specification.

It can be understood that the structure shown in the embodiments of this specification constitutes no specific limitation on the apparatus in the embodiments of this specification. In some other embodiments of this specification, the foregoing apparatus can include more or less components than those shown in the figure, or can combine some components, or can split some components, or can have different component arrangements. The components shown in the figure can be implemented by hardware, software, or a combination of software and hardware.

Content such as information exchange and execution processes between the modules in the foregoing apparatus and system is based on the same concept as that in the method embodiments of this specification. For specific content, references can be made to the descriptions in the method embodiments of this specification. Details are omitted here for simplicity.

The embodiments of this specification are described in a progressive way. For same or similar parts of the embodiments, mutual references can be made to the embodiments. Each embodiment focuses on a difference from other embodiments. In particular, the apparatus embodiments are basically similar to the method embodiments, and therefore are described briefly. For related parts, references can be made to partial descriptions in the method embodiments.

A person skilled in the art should be aware that, in the previously described one or more examples, functions described in this application can be implemented by hardware, software, firmware, or any combination thereof. When implemented by software, these functions can be stored in a computer-readable medium or transmitted as one or more instructions or code on a computer-readable medium.

The above-mentioned specific implementations further describe in detail the obj ectives, technical solutions, and beneficial effects of this application. It should be understood that the descriptions above are merely specific implementations of this application and are not intended to limit the protection scope of this application. Any modifications, equivalent replacements, or improvements made on the basis of the technical solutions in this application shall fall within the protection scope of this application.

## Claims

1. A TOTP-based identity authentication method, comprising:
obtaining a two-dimensional code from a web end;
reading, from the two-dimensional code, a key needed for enabling TOTP and a first signature, wherein the first signature is obtained after an authentication server signs the key by using a first private key in a first public-private key pair;
performing signature verification on the first signature by using a first public key in the first public-private key pair obtained in advance;
performing token calculation based on the key after the verification on the first signature succeeds; and
providing a calculated token to a user.

2. The method according to claim 1, wherein after the verification on the first signature succeeds and before the performing token calculation based on the key, the method further comprises:
signing device information of a terminal device by using a second private key in a second public-private key pair to obtain a second signature;
adding the second signature to an enabling confirmation request and sending the enabling confirmation request to the authentication server; and
continuing to perform the step of performing token calculation based on the key if a verification success message sent by the authentication server is received.

3. The method according to claim 1 or 2, wherein
performing, by a first TA application in a TEE of the terminal device, the step of performing signature verification on the first signature by using a first public key in the first public-private key pair obtained in advance; and/or
performing, by a second TA application in the TEE of the terminal device, the step of performing token calculation based on the key.

4. A TOTP-based identity authentication method, comprising:
sending, to an application server, a key request used to request a key needed for enabling TOTP;
receiving the key and a first signature sent by the application server, wherein the first signature is obtained after an authentication server signs the key by using a first private key in a first public-private key pair;
generating a two-dimensional code by using the received key and the received first signature, and sending the two-dimensional code to a business application end;
receiving a token input by a user, and adding the token to an identity verification request and sending the identity verification request to the application server; and
receiving an identity verification result sent by the application server.

5. A TOTP-based identity authentication method, comprising:
receiving a key request that is sent by a web end and that is used to request a key needed for enabling TOTP;
generating the key;
sending the key to an authentication server;
receiving a first signature sent by the authentication server, wherein the first signature is obtained after the authentication server signs the key by using a first private key in a first public-private key pair;
sending the key and the first signature to the web end;
receiving an identity verification request that is sent by the web end and that comprises a token; and
verifying legitimacy of a user's identity based on the identity verification request, and sending an identity verification result to the wed end.

6. The method according to claim 5, wherein after the sending the key and the first signature to the web end and before the receiving an identity verification request that is sent by the web end and that comprises a token, the method further comprises: storing the generated key after receiving an enabling confirmation success notification sent by the authentication server; and
the verifying legitimacy of a user's identity based on the identity verification request comprises:
performing token calculation based on the stored key; and
determining whether a calculated token is consistent with the token comprised in the identity verification request, wherein if the calculated token is consistent with the token comprised in the identity verification request, the identity verification is "legal"; otherwise, the identity verification is "illegal".

7. A TOTP-based identity authentication method, comprising:
receiving a key sent by an application server;
signing the key by using a first private key in a first public-private key pair to obtain a first signature; and
sending the first signature to the application server.

8. The method according to claim 7, wherein after the sending the first signature to the application server, the method further comprises:
receiving an enabling confirmation request that is sent by a business application end and that comprises a second signature, wherein the second signature is obtained after the business application end signs, by using a second private key in a second public-private key pair, device information of a terminal device that the business application end is located;
performing signature verification on the second signature by using a second public key in the second public-private key pair obtained in advance; and
sending a verification success message to the business application end after the verification on the second signature succeeds.

9. The method according to claim 8, wherein before the performing signature verification on the second signature by using a second public key in the second public-private key pair obtained in advance, the method further comprises:
obtaining, based on the received enabling confirmation request, a device model of the terminal device that the business application end is located; and
determining, based on the obtained device model, whether a security level of the terminal device satisfies an enabling need; and in response to that the security level of the terminal device satisfies the enabling need, querying the second public key in the second public-private key pair based on the obtained device model, and performing the step of performing signature verification on the second signature by using the second public key.

10. A TOTP-based identity authentication apparatus, comprising:
a scanning module, configured to obtain a two-dimensional code from a web end;
a reading module, configured to read, from the two-dimensional code, a key needed for enabling TOTP and a first signature, wherein the first signature is obtained after an authentication server signs the key by using a first private key in a first public-private key pair;
a first signature verification module, configured to perform signature verification on the first signature by using a first public key in the first public-private key pair obtained in advance; and
a token calculation module, configured to perform token calculation based on the key after the verification on the first signature succeeds, and provide a calculated token to a user.

11. A TOTP-based identity authentication apparatus, comprising:
a TOTP enabling processing module, configured to send, to an application server, a key request used to request a key needed for enabling TOTP;
a two-dimensional code generation module, configured to receive the key and a first signature sent by the application server, wherein the first signature is obtained after an authentication server signs the key by using a first private key in a first public-private key pair; and generate a two-dimensional code by using the received key and the received first signature, and send the two-dimensional code to a business application end; and
a TOTP verification processing module, configured to receive a token input by a user, and add the token to an identity verification request and send the identity verification request to the application server; and receive an identity verification result sent by the application server.

12. A TOTP-based identity authentication apparatus, comprising:
a key generation module, configured to receive a key request that is sent by a web end and that is used to request a key needed for enabling TOTP, and generate the key;
a signature addition request module, configured to send the key to an authentication server;
a key delivery module, configured to receive a first signature sent by the authentication server, wherein the first signature is obtained after the authentication server signs the key by using a first private key in a first public-private key pair; and send the key and the first signature to the wed end; and
a verification execution module, configured to receive an identity verification request that is sent by the web end and that comprises a token; and verify legitimacy of a user's identity based on the identity verification request, and send an identity verification result to the wed end.

13. A TOTP-based identity authentication apparatus, comprising:
a receiving module, configured to receive a key sent by an application server;
a first signature generation module, configured to sign the key by using a first private key in a first public-private key pair to obtain a first signature; and
a sending module, configured to send the first signature to the application server.

14. A computing device, comprising a memory and a processor, wherein the memory stores executable code, and when executing the executable code, the processor implements the method according to any one of claims 1 to 9.
